# EUROPEAN PATENT SPECIFICATION

(11) **EP 2 079 794 B1**
(45) Date of publication and mention of the grant of the patent: **25.01.2012**
(21) Application number: 07768782.0
(22) Date of filing: 16.07.2007
(51) Int. Cl.: C08K 7/02, C08J 5/04

(54) **SEAWEED FIBER-REINFORCED BIOCOMPOSITE AND METHOD FOR PRODUCING THE SAME USING HIGH-TEMPERATURE GRINDING**
SEETANGFASERVERSTÄRKTER BIOVERBUNDWERKSTOFF UND VERFAHREN ZUR HERSTELLUNG DAVON UNTER VERWENDUNG VON HOCHTEMPERATURMAHLEN
BIOCOMPOSITE RENFORCÉ DE FIBRES D'ALGUES ET PROCÉDÉ DE PRODUCTION DU BIOCOMPOSITE PAR BROYAGE À HAUTE TEMPÉRATURE

(30) Priority: 24.10.2006 KR 20060103643; 23.05.2007 KR 20070050532
(43) Date of publication of application: 22.07.2009
(73) Proprietor: Korea Institute of Energy Research, Daejeon 305-343 (KR)
(72) Inventor: HAN, Seong-Ok, Daejeon 302-120 (KR); KIM, Hong-Soo, Daejeon 302-744 (KR); YOO, Yoon-Jong, Daejeon 302-120 (KR); SEO, Yeong-Bum, Daejeon 305-762 (KR); LEE, Min-Woo, Daejeon 306-200 (KR)
(74) Representative: Caspary, Karsten
(86) International application number: PCT/KR2007/003454
(87) International publication number: WO 2008/050945

(56) References cited:
- JP-A- 2005 307 078
- JP-A- 2005 336 212
- KR-A- 20060 000 695
- KR-A- 20060 000 695

## Description

### BACKGROUND OF THE INVENTION

### Field of the Invention

The present invention relates to a red algae fiber-reinforced biocomposite and a method for preparing a biocomposite that is capable of uniformly dispersing a red algae fiber reinforcement via introduction of high-temperature grinding. More specifically, the present invention relates to an environmentally-friendly biocomposite prepared from a red algae fiber reinforcement obtained by solvent extraction and decoloration by means of high-temperature elevated-pressure molding and a method for preparing a biocomposite using high-temperature grinding which enables uniform dispersion of the red algae fiber reinforcement in the biocomposite.

### Description of the Related Art

Polymeric composites generally used in the automobile and building industries mostly use glass fiber as a reinforcement. Glass fiber is harmful to human body and is difficult to recycle, thus causing a number of energy and environmental problems. To reduce the use of such glass fiber, biocomposites employing natural fiber reinforcements are being recently used.

Biocomposites have a light weight (i.e. about 30% or more weight-reduction) than those of glass fiber-reinforced composites. Accordingly, biocomposites are a new advanced material that contributes to energy-saving based on an increase (1.6 %) in fuel-efficiency upon being applied for components of automobiles.

Unlike glass fiber, natural fiber has low abrasion resistance against mechanics and light-weight, thus enabling an 80% reduction in production energy. In particular, the cost of natural fibers is only about 1/4 of glass fibers. Specifically, the cost of natural fibers is about 5 won/g, whereas the cost of glass fibers is about 20 won/g.

Natural fibers have light-weight, superior toughness and high specific rigidity, as compared to glass fibers (density: 2.55 g/cm²). Biocomposites prepared until now and used in the art mostly employ powders or fibers derived from wood-based and nonwood-based natural fiber materials as cellulose-based reinforcements. However, the properties of cellulose-based reinforcements depend on growth conditions, growth sites and growth periods of woods or natural fibers. In particular, since the composition and size of fibers are different in each site, the properties of raw fibers used as reinforcements are sometimes different in each site. In addition, other problems of cellulose-based reinforcements are damage to forests caused by the use of wood-based reinforcements and side-effects associated with cultivation of nonwood-based specific plants (e.g. flax or hemp) which are mainly used for biocomposites as reinforcements.

Of seaweeds, red algae contain a great deal of fiber known as an "endofiber" and have a uniform diameter size of several microns. Red algae have crystallinity similar to cellulose fibers and bleached red algae exhibit superior thermal stability, as compared to cellulose fibers.

A gel extract obtained from the inside of red algae is utilized in food additives, health care products and agar materials. However, until now, there is no use in the field of red algae fibers. Thus, red algae fibers are mostly left wasted. Accordingly, biocomposites reinforced with red algae fibers are used as interior materials of automobiles and houses, thereby realizing utilization of red algae fibers for high value-added industrial materials and environmental protection resulting from a decrease in wastes. In particular, red algae are grown for a short time and are controlled to have a desired composition and size according to culturing methods. Based on these properties, red algae used for biocomposites as reinforcements can impart uniform mechanical properties to the biocomposites, as compared to cellulose-reinforced biocomposites, and furthermore, red algae reduce carbon dioxide through photosynthesis upon culturing for mass-production.

Red algae-reinforced exhibit superior dynamic properties, as compared to conventional natural fiber-reinforced biocomposites. In particular, red algae fibers show superior thermal stability, as compared to cellulose fibers. Accordingly, the danger that the thermal stability of reinforcements is deteriorated during preparation of biocomposites is relatively low. Besides, biocomposites, into which the reinforcements are uniformly dispersed, can be prepared by introducing high-temperature grinding into preparation processes of red algae reinforcements that enables simultaneous performance of drying, grinding and dissociation.

As domestic patents, Korean Patent Application No. 2004-0051814 filed by Yoo Kook-hyeon discloses decoloration and purification of fibers extracted from seaweed. According to this prior art, polysaccharide are removed from seaweed through hydrolysis and the seaweed fibers are bleached with oxidizing and reducing agents. However, the prior art does not teach use of seaweed fibers as reinforcements for biocomposite. In addition, Korean Patent Application No. 2004-0049633 filed by the applicant discloses a novel material developed from seaweed and by-products obtained from seaweed processing and a method for preparing an environmentally-friendly resin composition therefrom. More specifically, this prior art discloses a process for easily extraction-separating seaweed fibers, a mass-production method thereof and a method for preparing a novel material by extruding seaweed fibers with polyolepine polymers to develop packaging films for foods, bioapplicable medical materials and biodegradable plastic products. However, the novel material relates to a functional film and is thus different from structural materials suitable for application for exterior and interior materials of houses. In addition, this prior art does not disclose dispersion and dynamic properties of red algae reinforcements, both of which are closely associated with the performance of novel materials. Thus, the materials according to the prior art have limitation on applications for packaging films for foods.

Korean Patent No. 2005-0096042, filed by Pegasus international Ltd., discloses a method preparing a pulp from red algae for paper preparation wherein the pulp contains red algae internal gel extract in a low content. Korean Patent No. 2005-0092297, filed by Yoo hack-cheol, discloses a pulp and paper prepared from red algae and a preparation method thereof. This prior art is different from the present invention that employs red algae fibers as reinforcements. KR 2006 0000695 discloses an environmentally friendly material comprising resin and seaweed fibroid material.

As foreign patents, U.S. Patent No. 6, 103, 790 issued to Elf Atochem S.A. (FR), entitled "Cellulose microfibrilreinforced polymers and their applications" discloses preparation of cellulose microfibril-reinforced polymeric composites and applications thereof, which is different from the present invention that employs red algae fibers as reinforcements.

EP Patent No. 1,007,774 issued to TED LAPIDUS 75008 Paris, entitled "composite yarn, article containing such yarn and method for making it" discloses preparation of fabrics from red algae, which is different from the present invention that uses red algae fibers for biocomposites as structural materials.

### SUMMARY OF THE INVENTION

The present invention has been made in view of the problems, and it is one object of the present invention to develop a red algae fiber-reinforced biocomposite that is suitable both for use as interior and exterior materials of automobiles and houses due to its superior dynamic properties and for application as a case for electronic products owing to its low thermal expansion and superior thermal stability.

It is another object of the present invention to provide a method for preparing a red algae fiber-reinforced biocomposite that improves dispersability of the red algae fiber reinforcements in the biocomposite via introduction of high-temperature grinding.

The biocomposite reinforced with red algae fibers according to the present invention to accomplish the objects exhibits superior dynamic properties, as compared to conventional natural fiber-reinforced biocomposites.

The red algae fiber is a state in which inner gel and impurities are completely removed by washing, extraction, dehydration and decoloration and exhibit substantially equivalent crystallinity and superior thermal stability, as compared to cellulose.

Instead of conventional wood-based or nonwood-based cellulose fiber reinforcements, the red algae fiber is used as a reinforcement for a biocomposite that is composed of a biodegradable plastic and a reinforcement.

### BRIEF DESCRIPTION OF THE DRAWINGS

The above and other objects, features and other advantages of the present invention will be more clearly understood from the following detailed description taken in conjunction with the accompanying drawing, in which:
FIG. 1 is a flow chart illustrating a method for preparing a biocomposite from red algae fiber according to the present invention;
FIG. 2 is a flow chart illustrating a conventional method for preparing a biocomposite;
FIG. 3 is a SEM image showing superior dispersibility of a red algae-reinforced biocomposite prepared according to the present invention;
FIG. 4 is an image showing a red algae-reinforced biocomposite prepared according to a prior art;
FIGs. 5 and 6 are graphs comparing storage modulus and tan delta between the red algae-reinforced biocomposite of the present invention and conventional biocomposite reinforcements /reinforcement matrix, respectively;
FIG. 7 is a graph comparing storage modulus between the red algae-reinforced biocomposite of the present invention and conventional biocomposites reinforcements/reinforcement matrix);
FIG. 8 is a graph showing crystallinity of red algae fibers prepared according to the present invention and cellulose fibers;
FIGs. 9 and 10 are graphs showing comparison in thermal decomposition property of the red algae fibers prepared according to the present invention and cellulose fibers; and
FIG. 11 is a graph showing comparison in thermal expansion between various biocomposites prepared by mixing a PBS polymer as a matrix with natural fibers as a reinforcement; and
FIGs. 12 and 13 are graphs showing comparison in thermal expansion between biocomposites composed of red algae fibers and polybutylene succinate (PBS) according to the content of the red algae fibers.

### DESCRIPTION OF THE PREFERRED EMBODIMENTS

The present invention will now be described in greater detail.

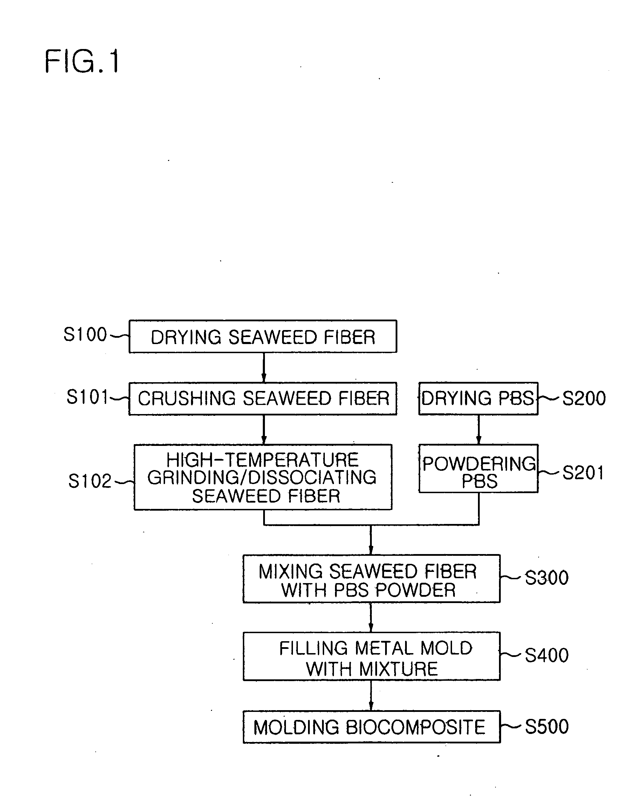

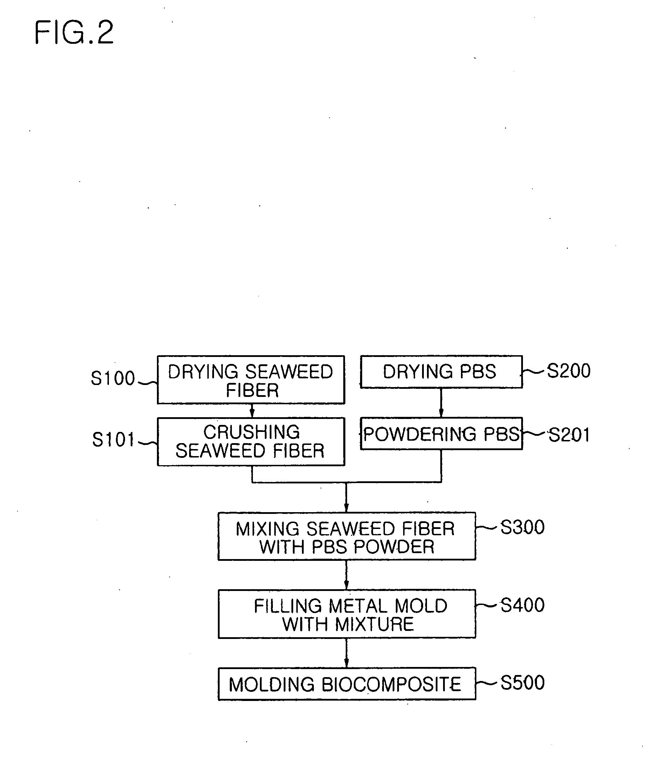

FIG. 1 is a flow chart illustrating a method for preparing a red algae fiber-reinforced biocomposite according to the present invention. FIG. 2 is a flow chart illustrating a conventional method for preparing a seaweed fiber-reinforced biocomposite.

The present invention is directed to a method for preparing a biocomposite composed of a polymeric reagent and a reinforcement, the method comprising the steps of: (S100) drying red algae fiber; (S101) crushing the red algae fiber; (S102) subjecting the red algae fiber to drying, grinding and dissociating into fine red algae fiber particles; (S200) dehydrating a polymeric reagent by drying; (S201) grinding a polymeric reagent selected from a biodegradable polymer and a general polymer into a powdery form; (S300) mixing the red algae fiber particles with the polymeric reagent powder to prepare an integral mixture of the red algae fiber and the polymeric reagent powder; (S400) filling a metal mold with the mixture; and (S500) compression-molding the metal mold under elevated pressure at a high temperature to prepare a biocomposite.

In step (S102), the fine red algae fiber particles are obtained by grinding-dissociating the red algae fiber at 5, 000 to 10,000 rpm for 25 to 100 seconds with a high-temperature grinder.

In addition, a biodegradable or general polymer may be used as the polymeric reagent. The biodegradable polymer is a material decomposed by biodegradation and examples thereof include polylactic acid (PLA), polycarprolactone (PCL), PCL/starch blend and polybutylene succinate (PBS). The general polymer is selected from the group consisting of thermoplastic resins including polypropylene, polyethylene and polycarbonate.

The step (S500) includes allowing the mixture to be favorably melted while the temperature elevates from ambient temperature to 135-180 °C at a rate of 5 °C /min and subjecting the mixture to compression at a pressure of 6.89 Mpa (1,000 psi) for 2 to 15 minutes.

The steps according to the method follow the step of preparing red algae fiber by removing gel and impurities inside red algae and bleaching the resulting red algae. The step of preparing red algae fiber includes the sub-steps of: subjecting red algae fiber to hydrothermal-treatment twice, once per hour, under the conditions of 120°C at 0.3-0.35 Mpa (3 to 3.5 bar ; about 44 psi) and once per hour under the conditions of 100°C at 0.1 Mpa (1 bar; about 14.5 psi); subjecting the red algae fiber to stirring-bleaching with chlorine dioxide once per hour at 90°C and to stirring-bleaching with hydrogen peroxide twice, once per hour at 90°C; washing the red algae fiber with pure water; and drying the red algae fiber at room temperature.

The step (S100) of drying the red algae fiber is carried out by drying the extracted and bleached red algae fiber at 100°C for 24 hours.

The step (S101) of crushing the red algae fiber is carried out by crushing the red algae fiber into smaller-size fiber particles using a mixer for 30 seconds.

In the step (S102) of drying, grinding and dissociating the red algae fiber into fine fiber, the primarily-crushed red algae fiber is grinding-dissociated into fine fiber particles using a high-temperature grinder. At this time, the red algae fiber particles are grinded with the high-temperature grinder at 6,000 rpm for 30 seconds or more and are passed through an 80 micrometer sieve. During the grinding, the inner temperature of the grinder is elevated to 70-100°C, thus enabling simultaneous performance of drying, grinding and dissociation. The grinding-dissociation of the red algae fiber into fine fiber particles at a high temperature enables removal of the remaining moisture.

As mentioned above, a biodegradable polymer or a general polymer may be used as the polymeric reagent. The polymeric reagent was dehydrated by drying using a plastic pellet in a vacuum oven at 80°C for 5 hours (S200). The dehydration aims to prevent deterioration of biocomposite properties which is caused by moisture contained in the polymeric reagent. The dried polymeric reagent is grinded into a powdery form using a mixer (S201).

An integral mixture was prepared from the red algae fiber particles and the polymeric reagent powders (S300). The term "integral mixture" used herein is defined as a mixture in a state where there occurs no separation between the red algae fine fibers and the polymeric reagent powders by which the polymeric reagent powders are evenly permeation-dispersed into the red algae fine fibers.

The mixture is filled into a metal mold (S400) and the metal mold is compression-molded under elevated pressure at a high temperature. As a result, a biocomposite is prepared which consists of the red algae fiber reinforcement and the polymeric reagent (S500).

According to one embodiment of the present invention, one of biodegradable polymers, polybutylene succinate (PBS) is used as the polymeric reagent, red algae is selected from seaweeds including green algae, brown algae and red algae and the PBS and red algae are is compression-molded at high-temperature to prepare a biocomposite. As a result, the biocomposite is molded with a size of 50mm×50mm. In a case where the mold size is 50mmX 50mm to secure optimum conditions of the process for preparing the biocomposite from PBS, after the temperature elevates from room temperature to 135°C at a rate of 5°C/min, high-temperature treating is carried out, having a retention time of about 15 to 20 minutes so that a matrix is sufficiently melted at 135°C and a resin thus flows. Then, the mold is compressed at a pressure of 6.89 mPa (1,000 psi) for 10 minutes and is cooled to room temperature with cooling water. The formed biocomposite is separated from the mold without any impact from the outside.

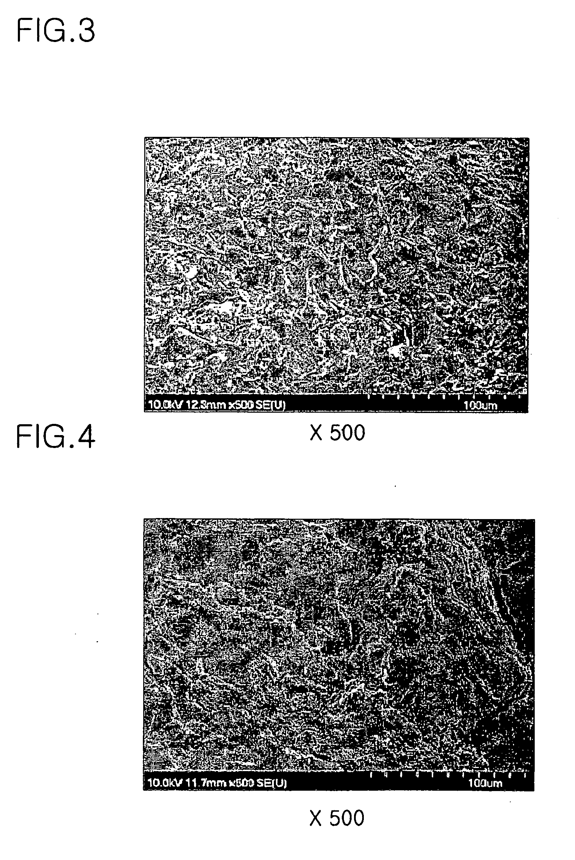

FIG. 3 is an image showing the cross section of the biocomposite prepared according to the present invention and FIG. 4 is an image showing the cross section of the biocomposite prepared according to a prior art.

It can be seen from FIG. 3 that red algae fibers are uniformly dispersed in the biocomposite prepared in accordance with the method of the present invention into which high-temperature grinding is introduced. On the other hand, it can be confirmed from FIG. 4 that in a case where only mixing of red algae fibers with biodegradable polymeric powders is conducted using a household mixer without performing any high-temperature grinding, the red algae fibers get entangled and are insufficiently dispersed into the biocomposite.

As shown in FIG. 3, the biocomposite reinforced with the red algae fibers drying-dissociated by high-temperature grinding exhibits superior dispersibility and good adhesion property in a polymeric matrix. On the other hand, as shown in FIG. 4, biocomposites prepared by mixing red algae fibers with biodegradable polymeric powders exhibit poor adhesion with a biodegradable polymeric matrix due to red algae fiber clusters present in the biocomposite.

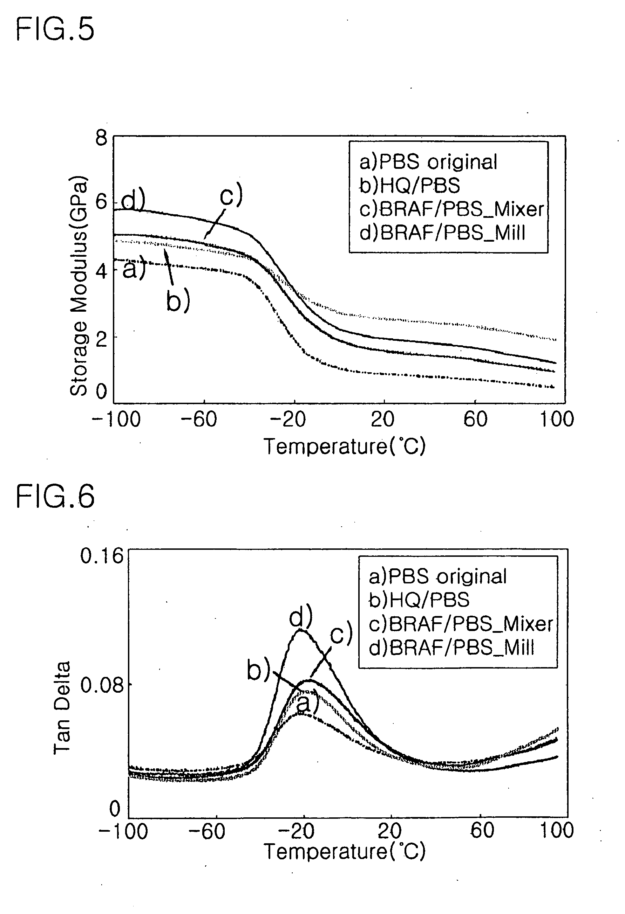

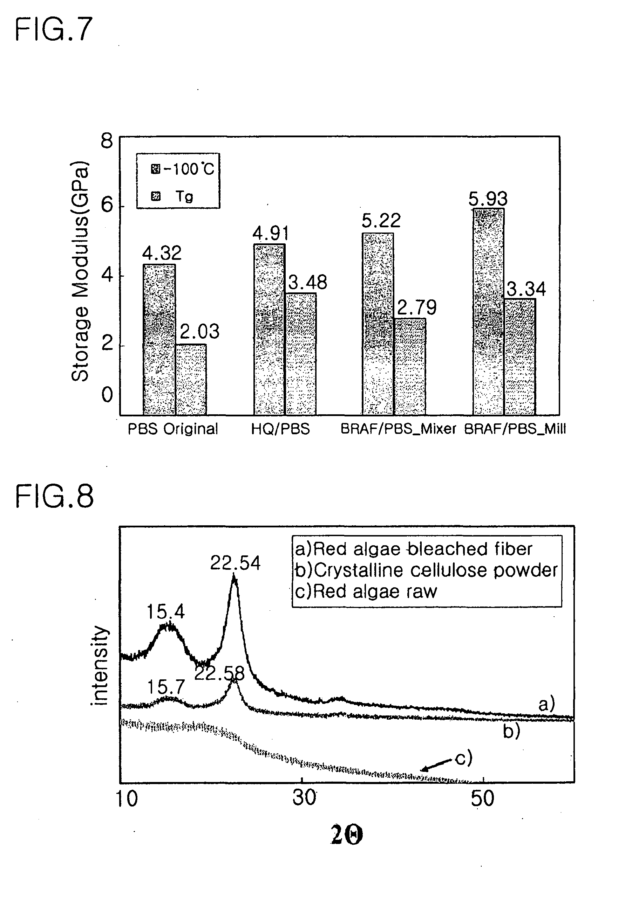

FIGs. 5 and 6 are graphs comparing storage modulus and tan delta as a function of temperature ranging from -100°C to 100°C between the biocomposite reinforcement of the present invention and conventional biocomposite reinforcements/ reinforcement matrix and more specifically, a) is a curve of the red algae fiber-reinforced biocomposite of the present invention, b) is a curve of a biocomposite reinforced with red algae fibers which undergo no high-temperature grinding, c) is a curve of a henequen fiber-reinforced biocomposite and d) is a curve of a biocomposite in which only a biodegradable plastic is used as a reinforcement. FIG. 7 is a graph comparing storage modulus at -100°C and Tg between the biocomposite matrix according to the present invention and a conventional biocomposite reinforcements/reinforcement matrix. From FIG. 7, it can be confirmed that the biocomposite reinforced with red algae fibers drying-dissociated by high-temperature grinding according to the present invention exhibit superior dynamic properties, as compared to red algae-reinforced biocomposites and henequen fiber-reinforced biocomposites prepared in accordance with a general mixing method.

FIG. 8 is a graph showing the crystallinity of a) red algae fibers according to the present invention (red algae bleached fibers) b) crystalline cellulose fibers and c) raw red algae. X-ray diffraction (XRD) patterns of the peaks at 15.4° (2θ) and 22.54° (2θ) reveal that the red algae fibers have the same crystallinity as the cellulose fibers.

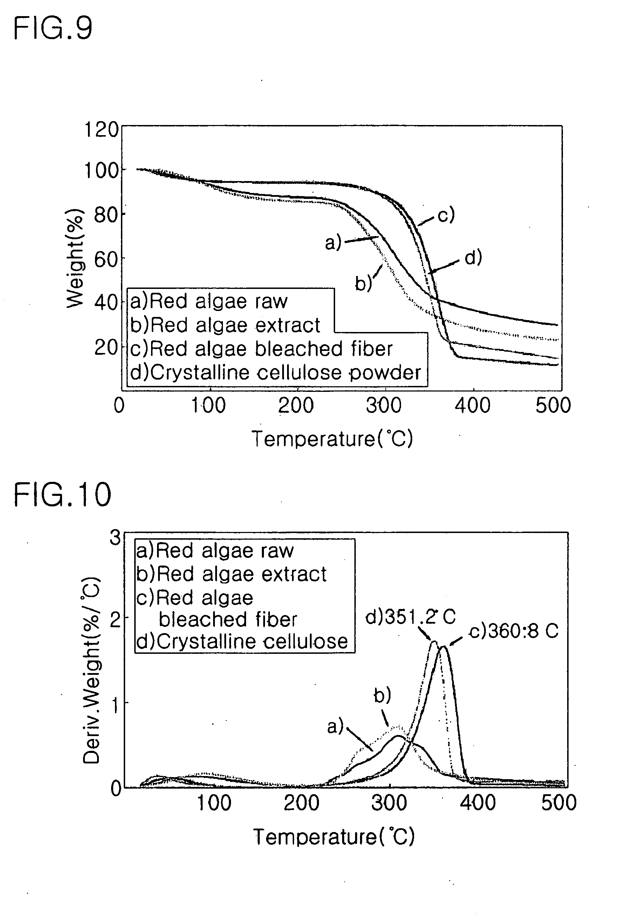

FIGs. 9 and 10 are graphs showing comparison in thermal decomposition property between a) raw red algae, b) red algae extract, c) red algae bleached fibers (the present invention) and d) crystalline cellulose fibers. The maximum decomposition peak of the red algae fibers is observed at 370°C, whereas the maximum decomposition peak of the cellulose fibers is observed at 370°C. These data reveal that the red algae fibers exhibit superior thermal stability, as compared to the cellulose fibers. The red algae and red algae extract exhibit show relatively low thermal stability due to gel components contained therein and show broad peaks. In particular, red algae are thermally decomposed within wide temperature ranges of 50 to 150°C and 220 to 320°C.

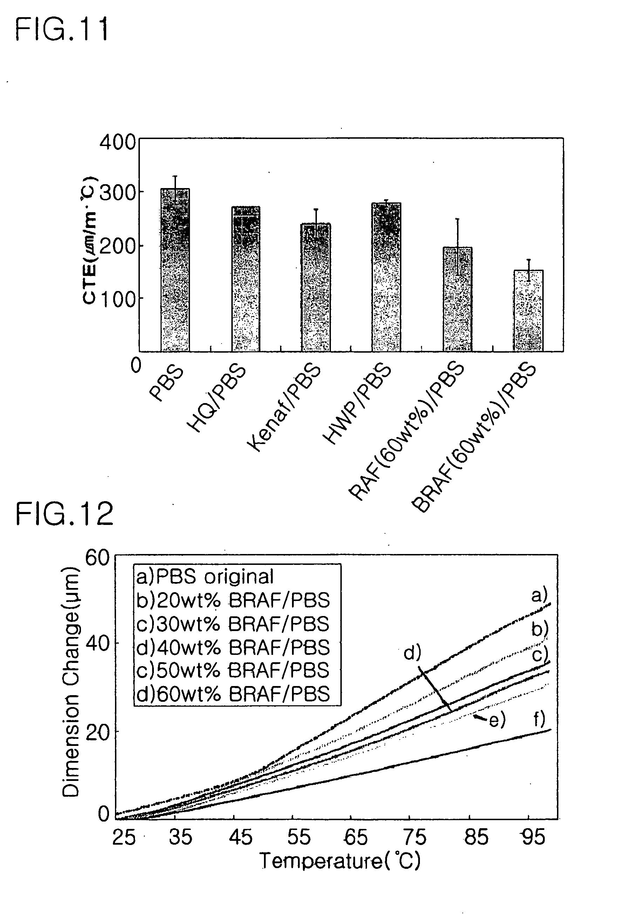

FIG. 11 is a graph showing thermal expansion of biocomposites molded from a mixture of PBS and various natural fibers. Based on the total weight of the mixture, the henequen, kenaf and non-coniferous fibers are used in an amount of 30 wt%, and red algae bleached fibers and red algae extract are used in an amount of 60 wt%. As represented by a vertical line in each case, the biocomposite reinforced with red algae which are dried, grinded, dissociated, bleached and purified according to the present invention exhibits the lowest thermal expansion coefficient.

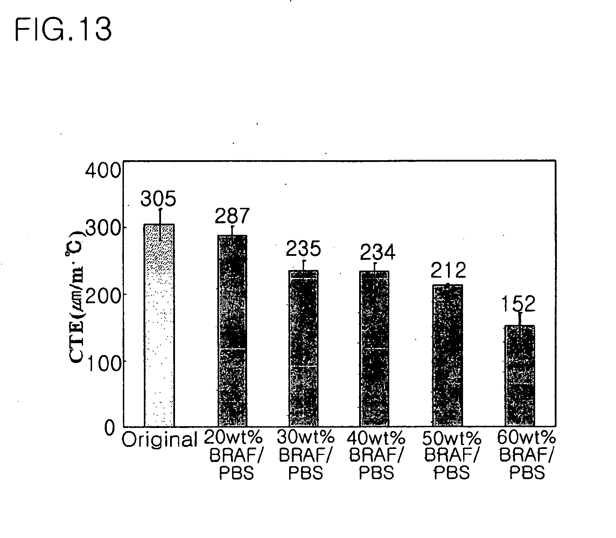

FIGs. 12 and 13 show thermal expansion of a biocomposite composed of red algae fiber extract and PBS, according to the content of the red algae fiber. FIG. 12 shows thermal expansion behavior of biocomposites in which red algae fibers are each used in a content of 0 wt%, 20 wt%, 30 wt%, 40 wt%, 50 wt% or 60 wt%. FIG. 13 shows the thermal expansion coefficient of each biocomposite in FIG. 12. As shown in FIG. 13, as the content of red algae fibers increases, the thermal expansion coefficient thereof decreases. When the red algae fibers are applied to heat-generating cases for electronic products, they minimize strain modulus to heat, thus stably supporting and preventing the electronic products.

As apparent from the foregoing, the present invention provides a red algae fiber-reinforced biocomposite that exhibits superior dynamic properties, as compared to cellulose-based biocomposites. In addition, a method for preparing the biocomposite involves introduction of high-temperature grinding into conventional preparation methods of biocomposites, thereby simultaneously drying, grinding and dissociating the red algae fibers into fine red algae fibers. As a result, it is possible to prepare the fine red algae fibers that are uniformly dispersed in the biocomposite and exhibit superior dynamic properties.

Red algae fiber exhibits substantially equivalent crystallinity and superior thermal stability, as compared to cellulose. According to the present invention, by using the red algae fiber as a biocomposite reinforcement, thermal and mechanical properties can be imparted to the biocomposite. The introduction of high-temperature grinding into conventional preparation methods can solve drawbacks associated with dispersion of reinforcements which cause serious problems in preparation of composite materials. The biocomposite according to the present invention is a novel advanced material that has advantages of environmental friendliness and energy-saving and has its potential applications for components of houses, automobiles and electronic products. Based on superior properties e.g. light-weight and biodegradability, the biocomposite greatly contributes to energy saving and environmental protection. Furthermore, the method of the present invention is utilized in a variety of applications e.g. preparation of fiber- and powder-reinforced polymer composites, thereby contributing to improvement in performance of the composites and realizing great advantages.

## Claims

1. A method for preparing a biocomposite composed of a polymeric reagent and a reinforcement using high-temperature grinding, the method comprising the steps of:
(S100) drying red algae fiber;
(S101) crushing the red algae fiber;
(S102) subjecting the red algae fiber to drying, grinding and dissociating into fine red algae fiber particles;
(S200) dehydrating a polymeric reagent by drying;
(S201) grinding a polymeric reagent selected from a biodegradable polymer and a general polymer into a powdery form;
(S300) mixing the red algae fiber particles with the polymeric reagent powder to prepare an integral mixture of the red algae fiber and the polymeric reagent powder;
(S400) filling a metal mold with the mixture; and
(S500) compression-molding the metal mold under elevated pressure at a high temperature to prepare the biocomposite.

2. The method according to claim 1, wherein in step S102, the fine red algae fiber particles are obtained by grinding-dissociating the red algae fiber with a high- temperature grinder at 5,000 to 10,000 rpm for 25 to 100 seconds .

3. The method according to claim 1 or 2, wherein step S500 includes allowing the mixture to be favorably melted while the temperature elevates from ambient temperature to 135°-180°C at a rate of 5°C/min and subjecting the mixture to compression at a pressure of 6.89 mPa (1,000 psi) for 10 to 15 minutes.

4. The method according to claim 1, wherein the biodegradable polymer is a material decomposed by biodegradation and the material is selected from polylactic acid (PLA), polycarprolactone (PCL), PCL/starch blend and polybutylene succinate (PBS)

5. The method according to claim 1, wherein the general polymer is selected from the group consisting of thermoplastic resins including polypropylene, polyethylene and polycarbonate.

6. The method according to claim 1, wherein in step S300, the red algae fiber is used in an amount of 20 to 60 wt%, based on the total weight of the integral mixture.

7. A biocomposite reinforced with red algae-extracted fiber, obtainable by a process wherein the red algae-extracted fiber particles are grinded with a high-temperature grinder and the inner temperature of the grinder is at 70°-100°C.

## Patentansprüche

1. Verfahren zum Aufbereiten eines Bioverbundwerkstoffs (engl. biocomposite) bestehend aus einem polymeren Reagenz und einem Verstärkungsstoff unter Verwendung von Hochtemperaturzerkleinerung, wobei das Verfahren die folgenden Schritte aufweist:
(S100) Trocknen von Rotalgenfasern:
(S101) Mahlen der Rotalgenfasern;
(S102) Aussetzen der Rotalgenfasern der Trocknung, Zerkleinerung und Aufspaltung in feine Rotalgenfaserpartikel;
(S200) Entwässern eines polymeren Reagenz durch Trocknung;
(S201) Zermahlen eines polymeren Reagenz, das aus einem biologisch abbaubaren Polymer und einem gewöhnlichen Polymer ausgewählt wird, zu Pulverform;
(S300) Mischen der Rotalgenfaserpartikel mit dem polymeren Reagenzpulver, um eine integrale Mischung aus den Rotalgenfasern und dem polymeren Reagenzpulver aufzubereiten;
(S400) Befüllen einer Metallform mit der Mischung; und
(S500) Formpressen der Metallform unter erhöhtem Druck bei hoher Temperatur, um den Bioverbundwerkstoff aufzubereiten.

2. Verfahren nach Anspruch 1, wobei in Schritt S102 die Rotalgenfaserpartikel erhalten werden durch Zermahlen/Aufspalten der Rotalgenfasern mit einem Hochtemperaturmahlwerk bei 5.000 bis 10.000 Umdrehungen pro Minute für eine Dauer von 25 bis 100 Sekunden.

3. Verfahren nach Anspruch 1 oder 2, wobei Schritt S500 einschließt, dass der Mischung ein positives Schmelzen ermöglicht wird, während sich die Temperatur von Raumtemperatur auf 135°C bis 180°C mit einer Steigerungsrate von 5°C/Minute erhöht, und dass die Mischung einem Pressen bei einem Druck von 6.89 MPa (1.000 psi) für eine Dauer von 10 bis 15 Minuten ausgesetzt ist.

4. Verfahren nach Anspruch 1, wobei das biologisch abbaubare Polymer ein durch biologischen Abbau zerfallenes bzw. zersetztes Material ist und das Material aus Polymilchsäure (PLA), Polycaprolacton (PCL), einem PCL/Stärkegemisch und Polybutylensuccinat (PBS) ausgewählt ist.

5. Verfahren nach Anspruch 1, wobei das gewöhnliche Polymer aus einer Gruppe bestehend aus thermoplastischen Harzen einschließlich Polypropylen, Polyethylen und Polycarbonat ausgewählt ist.

6. Verfahren nach Anspruch 1, wobei in Schritt S300 die Rotalgenfaser in einer Menge von 20 bis 60 Gewichts-% verwendet wird, basierend auf dem Gesamtgewicht der integralen Mischung.

7. Ein mit Rotalgenfasern verstärkter Bioverbundwerkstoff (engl. biocomposite), der durch ein Verfahren erhältlich ist, bei dem die Rotalgen-extrahierten Faserpartikel mit einem Hochtemperaturmahlwerk zerkleinert werden und die Innentemperatur des Mahlwerks bei 70°C bis 100°C liegt.

## Revendications

1. Procédé de préparation d'un biocomposite constitué d'un réactif polymère et d'un renforcement par broyage à haute température, le procédé comprenant les étapes de :
(S100) séchage d'une fibre d'algues rouges ;
(S101) écrasement de la fibre d'algues rouges ;
(S102) soumission de la fibre d'algues rouges à un séchage, broyage et dissociation en fines particules de fibre d'algues rouges ;
(S200) déshydratation d'un réactif polymère par séchage ;
(S201) broyage d'un réactif polymère choisi parmi un polymère biodégradable et un polymère général en une forme pulvérulente ;
(S300) mélange des particules de fibre d'algues rouges avec la poudre de réactif polymère pour préparer un mélange intégral de fibre d'algues rouges et de la poudre de réactif polymère ;
(S400) remplissage d'un moule métallique avec le mélange ; et
(S500) moulage par compression du moule métallique sous une pression élevée à une haute température pour préparer le biocomposite.

2. Procédé selon la revendication 1, dans lequel dans l'étape S102, les particules de fibre d'algues rouges sont obtenues par dissociation par broyage de la fibre d'algues rouges avec un broyeur à haute température de 5 000 à 10 000 tours par minute pendant 25 à 100 secondes.

3. Procédé selon la revendication 1 ou 2, dans lequel l'étape S500 comprend le fait de permettre au mélange de fondre avantageusement pendant que la température s'élève depuis la température ambiante jusqu'à 135° à 180°C à une vitesse de 5°C/min et la soumission du mélange à une compression sous une pression de 6,89 MPa (1 000 psi) pendant 10 à 15 minutes.

4. Procédé selon la revendication 1, dans lequel le polymère biodégradable est un matériau décomposé par une biodégradation et le matériau est choisi parmi l'acide polylactique (PLA), la polycaprolactone (PCL), un mélange PCL/amidon et le poly(butylène succinate) (PBS).

5. Procédé selon la revendication 1, dans lequel le polymère général est choisi dans le groupe constitué par les résines thermoplastiques incluant le polypropylène, le polyéthylène et le polycarbonate.

6. Procédé selon la revendication 1, dans lequel dans l'étape S300, la fibre d'algues rouges est utilisée dans une proportion de 20 à 60 % en masse, par rapport à la masse totale du mélange intégral.

7. Biocomposite renforcé par une fibre extraite d'algues rouges, susceptible d'être obtenue par un procédé dans lequel les particules de fibre extraite d'algues rouges sont broyées dans un broyeur à haute température et dans lequel la température interne du broyeur est de 70° à 100°C.
